# FASCICULE DE BREVET EUROPEEN

(11) **EP 1 257 612 B1**
(45) Date de publication et mention de la délivrance du brevet: **08.12.2004**
(21) Numéro de dépôt: 01905799.1
(22) Date de dépôt: 16.02.2001
(51) Int. Cl.: C09K 11/85, C01F 17/00, G01T 1/202

(54) **CRISTAUX SCINTILLATEURS, PROCEDE DE FABRICATION, APPLICATION DE CES CRISTAUX**
SCINTILLATORKRISTALLE, VERFAHREN ZUR DEREN HERSTELLUNG UND ANWENDUNG DIESER KRISTALLE
SCINTILLATOR CRYSTALS, METHOD FOR MAKING SAME, USE THEREOF

(30) Priorité: 17.02.2000 NL 1014401
(43) Date de publication de la demande: 20.11.2002
(73) Titulaire: STICHTING VOOR DE TECHNISCHE WETENSCHAPPEN, 3527 JP Utrecht (NL)
(72) Inventeur: DORENBOS, Pieter, NL-2281 GM Rijswijk (NL); VAN EIJK, Carel, Wilhelm, Eduard, NL-2625 LS Delft (NL); GÜDEL, Hans-Ulrich, CH-3174 Thörishaus (CH); KRÄMER, Karl, Wilhelm, CH-3012 Bern (CH); VAN LOEF, Edgar, Valentijn, Dieuwer, NL-3071 AP Rotterdam (NL)
(74) Mandataire: Colombier, Christian
(86) Numéro de dépôt international: PCT/EP2001/001838
(87) Numéro de publication internationale: WO 2001/060945

(56) Documents cités:
- US-A- 4 761 347
- US-A- 5 015 860
- O. GUILLOT-NO L ET AL.: "Optical and scintillation properties of cerium-doped LaCl3, LuBr3 and LuCl3" JOURNAL OF LUMINESCENCE, vol. 85, 1999, pages 21-35, XP001023576 cité dans la demande
- VAN EIJK C W E: "Development of inorganic scintillators" NUCLEAR INSTRUMENTS & METHODS IN PHYSICS RESEARCH, SECTION - A: ACCELERATORS, SPECTROMETERS, DETECTORS AND ASSOCIATED EQUIPMENT,NL,NORTH-HOLLAND PUBLISHING COMPANY. AMSTERDAM, vol. 392, no. 1-3, 21 juin 1997 (1997-06-21), pages 285-290, XP004090970 ISSN: 0168-9002

## Description

La présente invention concerne des cristaux scintillateurs, un procédé de fabrication permettant de les obtenir et l'utilisation desdits cristaux, notamment dans des détecteurs pour rayons gamma et/ou rayons X.

Les cristaux scintillateurs sont largement utilisés dans des détecteurs pour rayons gamma, rayons X, rayons cosmiques et particules dont l'énergie est de l'ordre de 1 KeV et également supérieure à cette valeur.

Un cristal scintillateur est un cristal transparent dans le domaine de longueur d'onde de scintillation, qui répond à une radiation incidente par l'émission d'une impulsion lumineuse

A partir de tels cristaux, généralement de monocristaux, on peut fabriquer des détecteurs où la lumière émise par le cristal que comprend le détecteur, est couplée à un moyen de détection de la lumière et produit un signal électrique proportionnel au nombre d'impulsions lumineuses reçus et à leur intensité. De tels détecteurs sont utilisés notamment dans l'industrie pour des mesures d'épaisseur ou de grammage, dans les domaines de la médecine nucléaire, de la physique, de la chimie, de la recherche pétrolière.

Une famille de cristaux scintillateurs connus et utilisés largement est du type iodure de Sodium dopé au Thallium, Nal (TI). Ce matériau scintillateur découvert en 1948 par Robert Hofstadter et qui est à la base des scintillateurs modernes reste encore le matériau prédominant dans ce domaine malgré près de 50 années de recherches sur d'autres matériaux. Cependant ces cristaux ont une décroissance de scintillation peu rapide.

Un matériau également utilisé est le Csl, qui en fonction des applications peut être utilisé pur, ou dopé soit avec du Thalium (TI) soit avec du Sodium (Na).

Une famille de cristaux scintillateurs qui a connu un grand développement est du type germanate de Bismuth (BGO). Les cristaux de la famille BGO ont des constantes de temps de décroissance élevées, qui limitent l'emploi de ces cristaux à de faibles taux de comptage.

Une famille plus récente de cristaux scintillateurs a été développée dans les années 1990 et est du type oxyorthosilicate de Lutécium activé au cérium LSO(Ce). Cependant ces cristaux sont très hétérogènes et ont des points de fusion très élevés (environ 2200°C).

Le développement de nouveaux matériaux scintillateurs aux performances améliorées fait l'objet de nombreuses études.

Un des paramètres que l'on cherche à améliorer est la résolution en énergie.

En effet dans la plupart des applications des détecteurs nucléaires, une bonne résolution en énergie est souhaitée. La résolution en énergie d'un détecteur de rayonnement nucléaire détermine en effet sa capacité à séparer des énergies de rayonnement très voisines. Elle est usuellement déterminée pour un détecteur donné à une énergie donnée, comme la largeur à mi hauteur du pic considéré sur un spectre en énergie obtenu à partir de ce détecteur, rapportée à l'énergie à la centroide du pic (voir notamment : G.F Knoll, "Radiation Detection and Measurement", John Wiley and Sons, Inc, 2^{nd} édition, p 114). Dans la suite du texte, et pour toutes les mesures effectuées, la résolution est déterminée à 662 keV, énergie de l'émission gamma principale du ¹³⁷Cs.

Plus la résolution en énergie est faible, meilleure est la qualité du détecteur. On considère que des résolutions en énergie de l'ordre de 7 % permettent d'obtenir de bons résultats. Néanmoins des valeurs inférieures de résolution présentent un grand intérêt.

Par exemple, dans le cas d'un détecteur utilisé pour analyser différents isotopes radioactifs, une meilleure résolution en énergie permet une meilleure distinction de ces isotopes.

Une augmentation de la résolution en énergie est particulièrement avantageuse pour un dispositif d'imagerie médicale par exemple de type Gamma camera d'Anger ou Tomographe à Emission de Positron (TEP), car elle permet d'améliorer fortement le contraste et la qualité des images, permettant ainsi une détection plus précise et plus précoce des tumeurs.

Un autre paramètre très important est la constante de temps de décroissance de la scintillation(dite " decay time "), ce paramètre est usuellement mesuré par la méthode dite "Start Stop" ou "Multi hit méthod", (décrite par W.W Moses ( Nucl. Instr and Meth. A336 (1993) 253).

Une constante de temps de décroissance la plus faible possible est souhaitée, de façon à pouvoir augmenter la fréquence de fonctionnement des détecteurs. Dans le domaine de l'imagerie médical nucléaire, ceci permet par exemple de réduire considérablement les durée d'examens. Une constante de temps de décroissance peu élevée permet de plus d'améliorer la résolution temporelle des dispositifs détectant des évènements en coïncidence temporelle. C'est le cas des Tomographes à Emission de Positron (TEP), où la réduction de la constante de temps de décroissance du scintillateur permet d'améliorer significativement les images en rejetant avec plus de précision les évènements non coïncidents.

En général le spectre de déclin de scintillation en fonction du temps peut être décomposé en une somme d'exponentielles caractérisées chacune par une constante de temps de décroissance

La qualité d'un scintillateur est essentiellement déterminée par les propriétés de la contribution de la composante d'émission la plus rapide.

Les matériaux scintillateurs usuels ne permettent pas d'obtenir à la fois des bonnes résolutions en énergie et des constantes de temps de décroissance rapides.

En effet des matériaux comme le Nal(TI) présentent une bonne résolution en énergie sous excitation gamma, d'environ 7 % mais une constante de temps de décroissance élevée d'environ 230 ns. De même Csl(TI) et Csl(Na) ont des constantes de temps de décroissance élevées, notamment supérieures à 500 ns.

Des constantes de temps de décroissance peu élevées peuvent être obtenues avec LSO(Ce), notamment de l'ordre de 40 ns, mais la résolution en énergie sous excitation gamma à 662 keV de ce matériau est généralement supérieure à 10 %.

Récemment des matériaux scintillateurs ont été divulgués par O. Guillot-Noël et al. (" Optical and scintillation properties of cerium doped LaCl₃, LuBr₃ and LuCl₃" in Journal of Luminescence 85 (1999) 21-35). Cet article décrit les propriétés de scintillation de composés dopés au cérium tels que LaCl₃ dopé par 0,57 mole % Ce ; LuBr₃ dopé par 0,021 mole %, 0,46 mole % et 0,76 mole % Ce ; LuCl₃ dopé par 0,45 mole % Ce. Ces matériaux scintillateurs ont des résolutions en énergie assez intéressantes, de l'ordre de 7 % et des constantes de temps de décroissance de la composante rapide de scintillation assez faibles, notamment comprises entre 25 et 50 ns. Cependant l'intensité de la composante rapide de ces matériaux est faible, notamment de l'ordre de 1000 à 2000 photons par MeV et ne permet pas leur emploi en tant que composant d'un détecteur performant.

Le US 5,015,860 enseigne un cristal scintillateur en LaF₃ dopé par CeF₃ et contenant 25 à 99,5% de LaF₃ pour 0,5 à 75% de CeF₃.

L'article de VAN EIJK C W E, "Development of inorganic scintillators" NUCLEAR INSTRUMENTS & METHODS IN PHYSICS RESEARCH, SECTION - A: ACCELERATORS, SPECTROMETERS, DETECTORS AND ASSOCIATED EQUIPMENT,NL,NORTH-HOLLAND PUBLISHING COMPANY. AMSTERDAM, vol. 392, no. 1-3, 21 juin 1997 (1997-06-21), pages 285-290, XP004090970 ISSN: 0168-9002, enseigne l'utilisation de cristaux dopés au Cerium, tels que LaF₃, K₂LaCl₅, CsY₂F₇, BaLiF₃ comme scintillateur.

L'objet de la présente demande porte sur un matériau susceptible de présenter une constante de temps de décroissance faible, notamment au moins équivalente à celle du LSO(Ce), et dont l'intensité de la composante rapide de scintillation est adaptée à la réalisation de détecteur performant, notamment est supérieure à 4000 ph/MeV (photon par MeV), voire même supérieure à 8000 ph/MeV (photon par MeV), et de manière préférée une bonne résolution en énergie, notamment au moins aussi bonne que celle de Nal(TI).

Ce but est atteint selon l'invention par un matériau scintillateur inorganique de composition générale **M**_{**1-x**}**Ce**_{**x**}**Br**_{**3**}**,**
où M est choisi parmi les lanthanides ou les mélanges de lanthanides du groupe : La, Gd, Y, notamment choisi parmi les lanthanides ou les mélanges de lanthanides du groupe : La, Gd,
et où x est le taux molaire de substitution de M par du cérium, nommé par la suite "taux de cérium ", avec x supérieur ou égal à 0,0001 et strictement inférieur à 1.

On entend par lanthanides les éléments de transition de numéro atomique 57 à 71, ainsi que l'Yttrium (Y), comme il est usuel dans le domaine technique de l'invention.

Un matériau scintillateur inorganique selon l'invention est substantiellement constitué de M₁₋ₓCeₓBr_{3,} et peut comprendre également des impuretés usuelles dans le domaine technique de l'invention. Les impuretés usuelles sont en général des impuretés provenant des matières premières dont le taux est notamment inférieur à 0,1%, voire même inférieur à 0,01%, et/ou des phases parasites dont le pourcentage volumique est notamment inférieur à 1%.

En effet, les inventeurs ont su montrer que les composés de M₁₋ₓCeₓBr₃ définis ci-dessus, comprenant du cérium présentent des propriétés remarquables. L'émission de scintillation de ces matériaux présente une composante rapide intense (d'au moins 10000 ph/MeV) et de constante de temps de décroissance faible, de l'ordre de 20 à 40 ns.

Un matériau préféré selon l'invention est de formule La₁₋ₓCeₓBr₃, en effet ce matériau présente simultanément une excellente résolution en énergie à 662 keV, notamment inférieure à 5 %, et même à 4 %.

Selon un mode de réalisation, le matériau scintillateur selon l'invention a une résolution en énergie inférieure à 5 % à 662 keV.

Selon un autre mode de réalisation, le matériau scintillateur selon l'invention a une constante de temps de décroissance rapide inférieure à 40 ns, voire même inférieure à 30 ns.

Selon un mode de réalisation préféré, le matériau scintillateur selon l'invention a à la fois une résolution en énergie inférieure à 5 % à 662 keV et une constante de temps de décroissance rapide inférieure à 40 ns, voire même inférieure à 30 ns.

De manière préférée, le taux de cérium, x, est d'au moins 0,01 et est compris notamment entre 0,01 et 0,9 , et même notamment supérieur ou égal à 0,02 voire même supérieur ou égal à 0,04 , et/ou de préférence inférieur ou égal à 0,5 , voire même inférieur ou égal à 0,3 .

Selon un autre mode de réalisation le taux de cérium x est compris entre 0,0001 et 0,01 , notamment au moins égal à 0,001 , voire au moins égal à 0,002. Le taux de cérium est de manière préférée sensiblement égal à 0,005.

Selon un mode de réalisation le matériau scintillateur selon l'invention est un monocristal permettant d'obtenir des pièces d'une grande transparence dont les dimensions sont suffisantes pour arrêter et détecter efficacement les rayonnements à détecter, y compris à haute énergie. Le volume de ces monocristaux est notamment de l'ordre de 10 mm³ , voire supérieur à 1 cm³ et même supérieur à 10 cm³.

Selon un autre mode de réalisation, le matériau scintillateur selon l'invention est une poudre ou polycristal par exemple sous la forme de poudres mélangées avec un liant ou bien sous forme de sol-gel.

L'invention concerne également un procédé pour l'obtention du matériau scintillateur M₁₋ₓCeₓBr₃, défini ci-dessus, sous forme de monocristal par méthode de croissance Bridgman , par exemple en ampoules de quartz scellées sous vide, notamment à partir d'un mélange de poudres commerciales de MBr₃ et CeBr_{3.}

L'invention concerne également l'utilisation du matériau scintillateur ci-dessus comme composant d'un détecteur de rayonnement notamment par rayons gamma et/ou rayons X.

Un tel détecteur comprend notamment un photodétecteur couplé optiquement au scintillateur pour produire un signal électrique en réponse à l'émission d'une impulsion de lumière produite par le scintillateur.

Le photodétecteur du détecteur peut notamment être un photomultiplicateur, ou bien une photodiode, ou bien un capteur CCD.

L'utilisation préférée de ce type de détecteur porte sur la mesure de rayonnements gamma ou X; un tel système est également susceptible de détecter les rayonnements Alpha, Beta et les électrons. L'invention concerne également l'utilisation du détecteur ci-dessus dans les appareils de médecine nucléaire, notamment les Gamma caméra de type Anger et les scanners à Tomographie d'Emission de Positron (voir par exemple C.W.E. Van Eijk, " Inorganic Scintillator for Medical Imaging ", International Seminar New types of Detectors, 15-19 May 1995 - Archamp, France. Publié dans "Physica Medica", Vol XII, supplément 1, Juin 96).

Selon une autre variante, l'invention concerne l'utilisation du détecteur ci-dessus dans les appareils de détection pour forage pétrolier, (voir par exemple " Applications of scintillation counting and analysis ", dans " Photomultiplier tube, principle and application", chapître 7, Philips).

D'autres détails et caractéristiques ressortent de la description ci-après de modes de réalisation préférés non limitatifs et de données obtenues sur des échantillons constitués de monocristaux selon l'invention.

Le tableau 1 présente les résultats de caractéristiques de scintillation pour des exemples selon l'invention (exemples 1 à 5) ainsi que des exemples comparatifs (exemples A à G).

x correspond au taux, de cérium substitué à l'atome M.

Les mesures sont effectuées sous une excitation de rayon y à 662 keV. Les conditions de mesures sont précisées dans la publication de O. Guillot-Noël, citée plus haut.

L'intensité d'émission est exprimée en photon par MeV.

L'intensité d'émission est reportée en fonction du temps d'intégration jusqu'à 0,5 , 3 et 10 microsecondes .

La composante rapide de scintillation est caractérisée par sa constante de temps de décroissance " decay time ", τ, en nanoseconde, et par son intensité de scintillation (en photon/MeV), qui représente la contribution de cette composante au nombre total de photons émis par le scintillateur

Les échantillons correspondants aux mesures des exemples sont des petits monocristaux, de l'ordre de 10mm³.

Du tableau 1, on constate que les composés selon l'invention de type M₁₋ₓCeₓBr₃ comprenant du cérium (ex1 à ex5) présentent tous des constantes de temps de décroissance de la composante rapide de fluorescence très avantageuses, comprises entre 20 et 40 ns et l'intensité de scintillation de cette composante rapide est remarquable et est très supérieure à 10000 ph/MeV : elle atteint en effet environ 40000 ph/MeV.

En outre la résolution, R%, des exemples selon l'invention (ex1 à ex4) où M = La, est excellente et revêt un caractère inattendu, avec des valeurs comprises entre 3 et 4 %, nettement améliorée par rapport au Nal(TI).

En effet les composés connus de bromure de lanthanides (exemples A ,B et C ) ne présentent pas un ensemble de caractéristiques de scintillation aussi remarquable. Par exemple les bromures de Lutécium (exemples B et C) dopés au cérium ont une bonne résolution, R%, mais l'intensité de la composante rapide est faible, très sensiblement inférieure à 4000 ph/MeV. Les fluorures de lanthanides connus (exemples D, E, F, G) ont quant à eux une très faible intensité d'émission.

De manière particulièrement surprenante, les inventeurs ont constaté une augmentation considérable de l'intensité de la composante rapide d'émission pour des bromures de La et de Gd contenant du cérium.

Les matériaux scintillateurs selon l'invention, en particulier les matériaux de composition générale La₁₋ₓCeₓBr₃, ont des performances qui sont particulièrement adaptés pour augmenter les performances des détecteurs, à la fois en terme de résolution en énergie, de résolution temporelle et de taux de comptage.

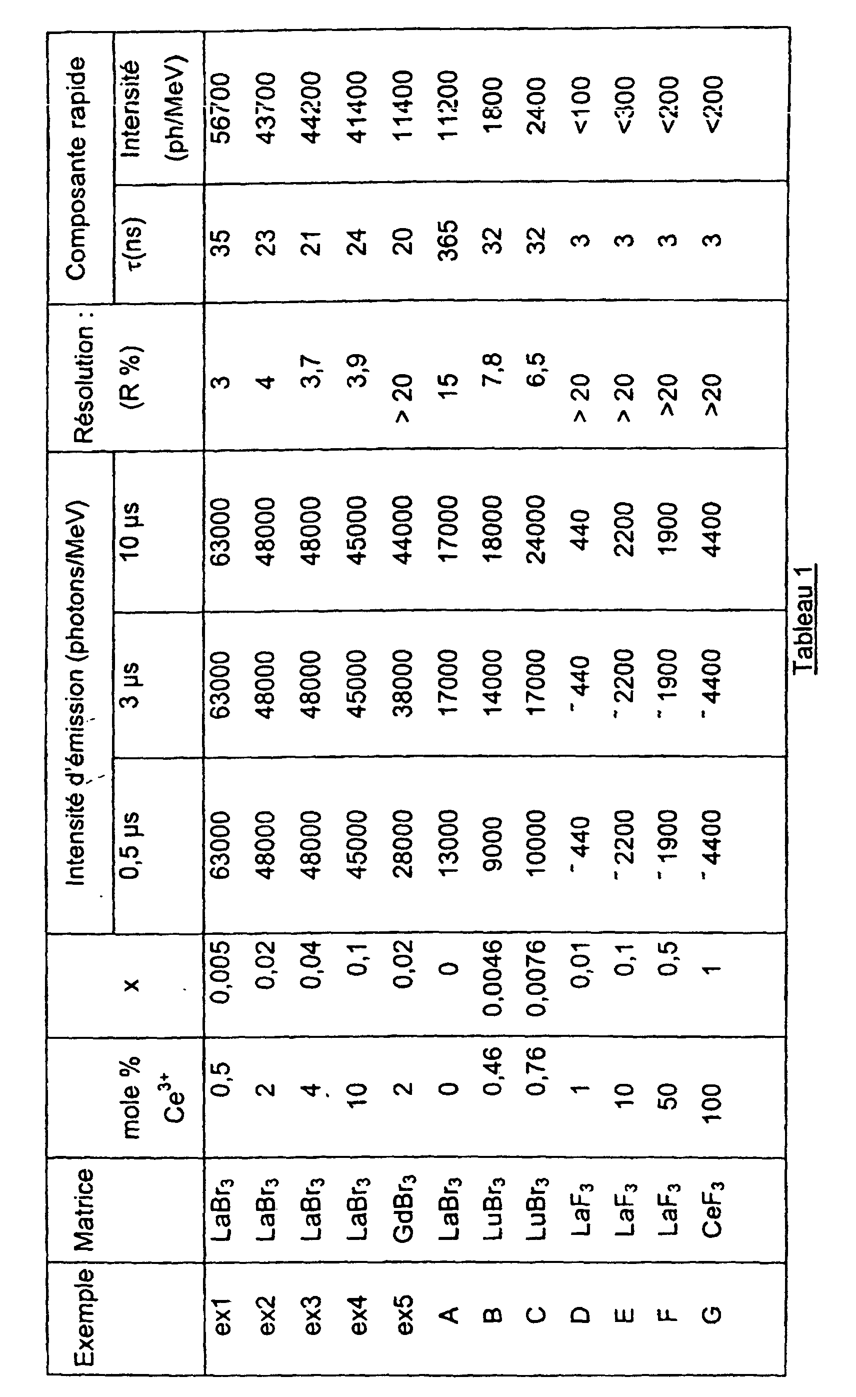

## Revendications

1. Matériau scintillateur inorganique de composition générale **M**_{**1-x**}**Ce**_{**x**}**Br**_{**3**}**,**
où M est choisi parmi les lanthanides ou les mélanges de lanthanides du groupe : La, Gd, Y, notamment choisi parmi les lanthanides ou les mélanges de lanthanides du groupe : La, Gd,
et où x est le taux molaire de substitution de M par du cérium, avec x supérieur ou égal à 0,0001 et strictement inférieur à 1.

2. Matériau scintillateur selon la revendication 1, **caractérisé en ce que** M est du lanthane (La).

3. Matériau scintillateur selon l'une des revendications 1 ou 2, **caractérisé en ce que** x est supérieur à 0,01 et/ou inférieur ou égal à 0,9 , voire inférieur ou égal à 0,5 , et même inférieur ou égal à 0,3 .

4. Matériau scintillateur selon la revendication 3, **caractérisé en ce que** 0,02 ≤ x ≤ 0,3.

5. Matériau scintillateur selon l'une des revendications 1 ou 2, **caractérisé en ce que** 0,0001 < x ≤ 0,01 , notamment supérieur ou égal à 0,001 , notamment sensiblement égal à 0,005.

6. Matériau scintillateur selon l'une quelconque des revendications précédentes, **caractérisé en ce que** le matériau scintillateur est un monocristal notamment supérieur à 10 mm³, voire supérieur à 1 cm³.

7. Matériau scintillateur selon l'une quelconque des revendications 1 à 5, **caractérisé en ce que** le matériau scintillateur est une poudre ou un polycristal.

8. Procédé de croissance du matériau scintillateur monocristallin selon la revendication 6, **caractérisé en ce que** le monocristal est obtenu par méthode de croissance Bridgman, notamment en ampoules de quartz scellées sous vide, par exemple à partir d'un mélange de poudres de MBr₃ et CeBr₃.

9. Utilisation du matériau scintillateur selon l'une quelconque des revendications 1 à 7 comme composant d'un détecteur de scintillation notamment pour des applications dans l'industrie, le domaine médical et/ou la détection pour le forage pétrolier

10. Utilisation du détecteur de scintillation selon la revendication 9 comme élément d'un scanner à Tomographie d'Emission de Position ou d'une Gamma Caméra de type Anger.

## Patentansprüche

1. Anorganisches Szintillatormaterial mit der allgemeinen Zusammensetzung M₁₋ₓCeₓBr₃, worin M aus den Lanthanoiden oder Gemischen von Lanthanoiden der Gruppe La, Gd und Y und insbesondere aus den Lanthanoiden oder Gemischen von Lanthanoiden der Gruppe La und Gd ausgewählt ist und x den durch Cer substituierten Molanteil von M bedeutet, wobei x größer oder gleich 0,0001 und streng kleiner als 1 ist.

2. Szintillatormaterial nach Anspruch 1, **dadurch gekennzeichnet, dass** M Lanthan (La) bedeutet.

3. Szintillatormaterial nach Anspruch 1 oder 2, **dadurch gekennzeichnet, dass** x mehr als 0,01 und/oder weniger als oder gleich 0,9, sogar weniger als oder gleich 0,5, und selbst weniger als oder gleich 0,3 beträgt.

4. Szintillatormaterial nach Anspruch 3, **dadurch gekennzeichnet, dass** 0,02 ≤ x ≤ 0,3.

5. Szintillatormaterial nach Anspruch 1 oder 2, **dadurch gekennzeichnet, dass** 0,0001 < x ≤ 0,01, insbesondere größer oder gleich 0,001, und speziell etwa gleich 0,005.

6. Szintillatormaterial nach einem der vorhergehenden Ansprüche, **dadurch gekennzeichnet, dass** es ein insbesondere mehr als 10 mm³ und sogar mehr als 1 cm³ großer Einkristall ist.

7. Szintillatormaterial nach einem der Ansprüche 1 bis 5, **dadurch gekennzeichnet, dass** es ein Pulver oder ein Polykristall ist.

8. Verfahren zum Züchten des monokristallinen Szintillatormaterials nach Anspruch 6, **dadurch gekennzeichnet, dass** der Einkristall durch das Bridgman-Verfahren, insbesondere in unter Vakuum verschlossenen Quarzampullen, beispielsweise aus einem MBr₃-CeBr₃-Pulvergemisch, erhalten wird.

9. Verwendung des Szintillatormaterials nach einem der Ansprüche 1 bis 7 als Komponente eines Szintillationsdetektors, insbesondere für Verwendungen in der Industrie, auf medizinischem Gebiet und/oder bei der Detektion von Erdölbohrungen.

10. Verwendung des Szintillationsdetektors nach Anspruch 9 als Bestandteil eines Positronenemissionstomographen oder einer Anger-Gammakamera.

## Claims

1. Inorganic scintillating material of general composition M₁₋ₓCeₓBr₃,
where M is chosen from the lanthanides or mixtures of lanthanides of the group: La, Gd, Y, especially chosen from the lanthanides or the mixtures of lanthanides of the group: La, Gd,
and where x is the molar level of substitution of M by cerium, where x is greater than or equal to 0.0001 and strictly less than 1.

2. Scintillating material according to Claim 1, **characterised in that** M is lanthanum (La).

3. Scintillating material according to one of Claims 1 or 2, **characterised in that** x is greater than 0.01 and/or less than or-equal to 0.9, or even less than or equal to 0.5, and even less than or equal to 0.3.

4. Scintillating material according to Claim 3, **characterised in that** 0.02 ≤ x ≤ 0.3.

5. Scintillating material according to one of Claims 1 or 2, **characterised in that** 0.0001 ≤ x ≤ 0.01, especially greater than or equal to 0.001, especially substantially equal to 0.005.

6. Scintillating material according to any one of the preceding claims, **characterised in that** the scintillating material is a single crystal especially greater than 10 mm³, or even greater than 1 cm³.

7. Scintillating material according to any one of Claims 1 to 5, **characterised in that** the scintillating material is a powder or a polycrystal.

8. Method of growing the single-crystal scintillating material according to Claim 6, **characterised in that** the single crystal is obtained by the Bridgman growth method, in particular in evacuated sealed quartz ampoules, for example from a mixture of MBr₃ and CeBr₃ powders.

9. Use of the scintillating material according to any one of Claims 1 to 7 as a component of a scintillation detector, especially for applications in industry, the medical field and/or detection for oil drilling.

10. Use of the scintillation detector according to Claim 9 as an element of a positron emission tomography scanner or of a gamma camera of the Anger type.
